# EUROPEAN PATENT APPLICATION

(11) **EP 2 960 628 A1**
(43) Date of publication of application: **30.12.2015**
(21) Application number: 14816557.4
(22) Date of filing: 20.03.2014
(51) Int. Cl.: G01C 21/26, H04M 1/00, H04M 11/00, H04W 4/02

(54) **POSITION INFORMATION SHARING SYSTEM, POSITION INFORMATION SHARING METHOD, AND POSITION INFORMATION SHARING PROGRAM**

(30) Priority: 28.06.2013 JP 2013136502
(71) Applicant: Aisin Aw Co., Ltd., Anjo-shi, Aichi 444-1192 (JP)
(72) Inventor: YAMASHITA, Koji, Anjo-shi Aichi 444-1192 (JP); AOYAMA, Shingo, Anjo-shi Aichi 444-1192 (JP); TANAKA, Yuichi, Anjo-shi Aichi 444-1192 (JP); MIZUNO, Tomohito, Anjo-shi Aichi 444-1192 (JP)
(74) Representative: TBK
(86) International application number: PCT/JP2014/057896
(87) International publication number: WO 2014/208154

(57) **Abstract**

[Object] To provide a positional information sharing system, a positional information sharing method, and a positional information sharing program that is capable of sharing further accurate positions of respective users between each other.

[Solving mean] The positional information sharing system includes: a current position detecting part 34 that detects a vehicle position on a basis of information directly obtained from a vehicle; a communication part 35 that is installed in the vehicle and performs communication; a current position detecting part 24 that detects a terminal position using a GPS; a communication part 25 that is installed in a portable terminal and performs communication; and a communication availability determining part 26a that determines whether mutual communication between the communication part 35 and the communication part 25 is available, in which, in a case in which it is determined that the mutual communication is available, the portable terminal 2 mutually shares the vehicle position with a different portable terminal 2, and in a case in which it is determined that the mutual communication is not available, the portable terminal 2 mutually shares the terminal position with the different portable terminal 2.

## Description

### TECHNICAL FIELD

The present invention relates to a positional information sharing system, a positional information sharing method, and a positional information sharing program.

### BACKGROUND ART

In recent years, there are proposed positional information sharing systems that share, among portable terminals, user positions that are positions of the respective users of the portable terminals (for example, Patent Document 1). A positional information sharing system as mentioned above includes a portable terminal that transmits own current position that has been detected by current position detecting means such as a GPS (Global Positioning System), and a server that obtains the transmitted current position of the portable terminal and transmits the obtained current position of the portable terminal to another portable terminal.

A positional information sharing system as mentioned above displays, on a display of each portable terminal, a position icon indicating a current position of the portable terminal and a position icon indicating a current position of another portable terminal that is mutually communicably connected with the portable terminal so as to be superimposed on map information of the vicinity of the current position of the portable terminal, to share the user position of each portable terminal. Thereby, each user is capable of recognizing, by the senses, the current position of another portable terminal by viewing the display of the portable terminal.

### RELATED ART DOCUMENT

### PATENT DOCUMENT

Patent Document 1: Japanese Patent Application Publication No. 2010-028322

### SUMMARY OF THE INVENTION

### Problem to be Solved by the Invention

In the aforementioned conventional technique, however, there have been a possibility that the current position of the portable terminal cannot be obtained accurately in an environment in which an accuracy of a detection result of the GPS becomes especially poor (for example, in an environment in which an object that disturbs satellite electrical waves of GPS is located in the vicinity of the portable terminal, in an environment in which the portable terminal is inside a tunnel, etc.). In such a case, an inaccurate user position may be shared with another user, which is unfavorable because the user may be confused. Consequently, there has been a demand for a positional information sharing system that is capable of sharing an accurate current position with another portable terminal even in a case in which the detection accuracy by current position detecting means of a portable device is poor.

In view of the above, it is an object of the present invention to provide a positional information sharing system, a positional information sharing method, and a positional information sharing program that enable respective users to share further accurate positions between each other.

### Means for Solving the Problem

In order to solve the above object and achieve a purpose, a positional information sharing system according to the present invention includes: vehicle position detecting means installed in a vehicle for detecting a vehicle position on a basis of information directly obtained from the vehicle, the vehicle position being a current position of the vehicle; vehicle-side communication means installed in the vehicle for performing communication; terminal position detecting means installed in a portable terminal for detecting a terminal position using a GPS, the terminal position being a current position of the portable terminal; terminal-side communication means installed in the portable terminal for performing communication with the vehicle-side communication means; and communication availability determining means for determining whether mutual communication between the vehicle-side communication means and the terminal-side communication means is available, wherein, in a case in which it is determined by the communication availability determining means that the mutual communication between the vehicle-side communication means and the terminal-side communication means is available, the terminal-side communication means obtains the vehicle position of the vehicle, in which the vehicle-side communication means is installed, from the vehicle position detecting means through the vehicle-side communication means and transmits the obtained vehicle position to a different portable terminal as a user position of the portable terminal, and in a case in which it is determined by the communication availability determining means that the mutual communication between the vehicle-side communication means and the terminal-side communication means is not available, the terminal-side communication means obtains the terminal position of the portable terminal, in which the terminal-side communication means is installed, from the terminal position detecting means and transmits the obtained terminal position to a different portable terminal as the user position of the portable terminal.

In addition, a positional information sharing method according to the present invention includes: communication availability determining step of determining whether mutual communication between vehicle-side communication means installed in a vehicle for performing communication and terminal-side communication means installed in a portable terminal for performing communication is available; step in which, in a case in which it is determined at the communication availability determining step that the mutual communication between the vehicle-side communication means and the terminal-side communication means is available, the terminal-side communication means obtains the vehicle position detected on a basis of information directly obtained from the vehicle by vehicle position detecting means installed in the vehicle, in which the vehicle-side communication means is installed, from the vehicle position detecting means through the vehicle-side communication means and transmits the obtained vehicle position to a different portable terminal as a user position of the portable terminal, the vehicle position being a current position of the vehicle; and step in which, in a case in which it is determined at the communication availability determining step that the mutual communication between the vehicle-side communication means and the terminal-side communication means is not available, the terminal-side communication means obtains the terminal position detected using a GPS by terminal position detecting means installed in the portable terminal, in which the terminal-side communication means is installed, from the terminal position detecting means and transmits the obtained terminal position to a different portable terminal as the user position of the portable terminal, the terminal position being a current position of the portable terminal.

A positional information sharing program according to the present invention causes a computer to execute the method according to claim 5.

### Effects of the Invention

According to the positional information sharing system, the positional information sharing method, and the positional information sharing program, in a case in which the mutual communication between the vehicle-side communication means and the terminal-side communication means is available, the vehicle position detected by the vehicle position detecting means installed in the vehicle is shared with a different portable terminal. Therefore, the detection result of the vehicle position detecting means with detection accuracy higher than the terminal position detecting means can be used to share the position. Thereby, the respective users can share further accurate positions between each other.

### BRIEF DESCRIPTION OF THE DRAWINGS

[FIG. 1] FIG. 1 is a block diagram showing an example of a positional information sharing system according to an embodiment of the present invention.
[FIG. 2] FIG. 2 shows a flowchart of a guidance process.
[FIG. 3] FIG. 3 shows a flowchart of a first-person positional information obtaining process.
[FIG. 4] FIG. 4 shows a display example of a display of a portable terminal.

### MODES FOR CARRYING OUT THE INVENTION

Hereinafter, a positional information sharing system, a positional information sharing method, and a positional information sharing program according to the present invention will be explained in detail with reference to the accompanying drawings. Initially, [I] Basic concept of embodiment is explained. Thereafter, [II] Specific contents of embodiment is explained. Lastly, [III] Modification example of embodiment is explained. However, the present invention is not limited to the embodiment.

### [I] Basic concept of embodiment

Initially, a basic concept of the embodiment is explained. The embodiment relates to a positional information sharing system, a positional information sharing method, and a positional information sharing program, which, roughly explained, makes it possible to share positional information (hereinafter, referred to as user position) of users of a plurality of portable terminals between each other.

Here, "sharing positional information" refers to a state in which users recognize their positions between each other, and its specific means is arbitrary. In the present embodiment, a case is explained, in which the positional information of users is displayed on the displays of the portable terminals owned by the respective user, by which the respective users viewing their displays recognize the positional information of the respective users.

In the present embodiment, in addition to the positions of the users, a destination is commonly shared. Specifically, a common destination is set for the portable terminals of the users. Therefore, the respective users are able to meet each other by moving along routes from their own positions to the common destination.

### [II] Specific contents of embodiment

Next, specific contents of the embodiment is explained.

### [Embodiment]

Hereinafter, the embodiment of the positional information sharing system, the positional information sharing method, and the positional information sharing program according to the present invention will be explained in detail with reference to the accompanying drawings. However, the present invention is not limited to the embodiment.

### (Configuration)

In the present embodiment, a case is exemplified, in which a positional information sharing program is installed in a center device 1, a portable terminal 2 such as a smart phone, and an in-vehicle navigation device (hereinafter, referred to as in-vehicle navigation) 3; thereby the center device 1, the portable terminal 2, and the in-vehicle navigation device 3 function as a positional information sharing system. However, the portable terminal 2 may be a portable terminal 2 for navigation besides a smart phone. In addition, the in-vehicle navigation 3 is not limited to a navigation device mounted on a vehicle in a fixed manner. The in-vehicle navigation 3 may be a navigation device mounted on the vehicle in a detachable manner as long as the device has position accuracy higher than the portable terminal 2 in a normal position detection environment. In addition, functions of the center device 1, the portable terminal 2, and the in-vehicle navigation 3 in the positional information sharing system can be achieved with the same configuration as known center devices, portable terminals, and in-vehicle navigations. Therefore, the explanation is not given. The configuration to achieve a function to share the positional information is especially explained.

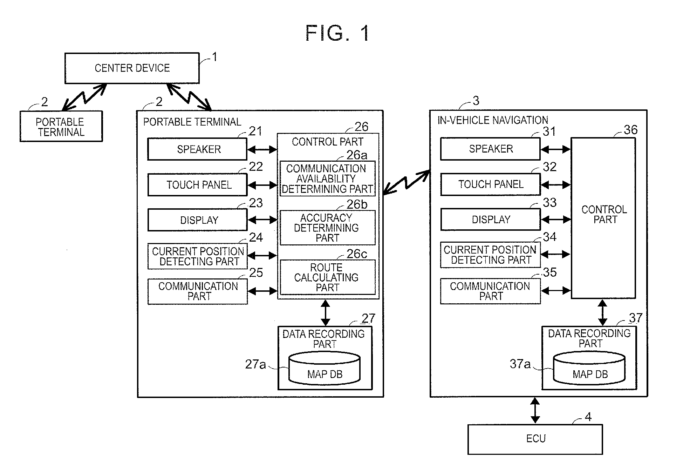

Initially, the configuration of the positional information sharing system according to the present embodiment is explained. FIG. 1 is a block diagram showing an example of the positional information sharing system according to the present embodiment. As shown in FIG. 1, the positional information sharing system is provided with the center device 1, the portable terminal 2, and the in-vehicle navigation 3. The center device 1 can be configured in the same manner as known center devices. Therefore the detailed explanation is not given.

### (Configuration - Portable terminal)

Initially, the configuration of the portable terminal 2 is explained. As shown in FIG. 1, the portable terminal 2 is provided with a speaker 21, a touch panel 22, a display 23, a current position detecting part 24, a communication part 25, a control part 26, and a data recording part 27.

### (Configuration - Portable terminal - Speaker)

The speaker 21 is audio output means for outputting information by audio based on control of the control part 26, and especially guidance means for providing guidance on a route calculated by a route calculating part (not shown) provided in the in-vehicle navigation 3. The audio outputted by the speaker 21 is not limited to a specific manner. The speaker 21 can output a synthetic audio generated as needed or a previously recorded audio.

### (Configuration - Portable terminal - Touch panel)

The touch panel 22 accepts various kinds of manual inputs from a user by being pressed by a finger, etc. of the user. The touch panel 22 is formed to be transparent or semitransparent and provided so as to be superimposed over a display face of the display 23 on a front side of the display 23. The touch panel 22 may be a known touch panel provided with operation position detecting means, for example, in a resistance film method, an electric capacitance method, etc.

### (Configuration - Portable terminal - Display)

The display 23 is display means for displaying an image provided by a collected information communication system and display means for displaying a map based on map information stored in a map DB 27a. The display 23 is not limited to a specific configuration. The display 23 may utilize a flat panel display such as a known liquid crystal display and organic EL display.

### (Configuration - Portable terminal - Current position detecting part)

The current position detecting part 24 is terminal position detecting means for detecting a current position of the portable terminal 2. For example, the current position detecting part 24 is provided with at least one of a GPS, a geomagnetic sensor, a distance sensor, and a gyro sensor (none of which is shown), and detects a current position (coordinate) and orientation of the portable terminal 2 in a known method. In the present embodiment, the explanation is given based on the configuration that the current position detecting part 24 detects a current position using the GPS. In the explanation, the current position detected by the current position detecting part 24 of the portable terminal 2 is referred to as "terminal position," as necessary, and the current position detected by a current position detecting part 34 of the in-vehicle navigation 3 that is described later is referred to as "vehicle position," as necessary.

### (Configuration - Portable terminal - Communication part)

The communication part 25 is terminal-side communication means for performing communication with the center device 1 or with a communication part 35 of the in-vehicle navigation 3 through a network. The network is not limited to a specific type or configuration. However, for example, the communication part 25 may utilize movable radio communication means for performing communication through a known movable network, or radio communication means for a known VICS (registered trademark) system through FM multiplex broadcasting or beacon. In addition, the communication means for performing communication with the center device 1 may be configured to be different from the communication means for performing communication with the in-vehicle navigation 3. In the present embodiment, the communication part 25 is configured with two kinds of communication means which are movable radio communication means for performing communication with the center device 1 and radio communication means using known Bluetooth (registered trademark) for performing communication with the in-vehicle navigation 3.

### (Configuration - Portable terminal - Control part)

The control part 26 is control means for controlling the portable terminal 2, specifically a computer provided with a CPU, various kinds of programs recognized and executed on the CPU (including a basic control program such as an OS and an application program to be activated on the OS and realize specific functions), and an internal memory such as a RAM for storing the programs and various kinds of data. Particularly, a positional information sharing program according to the present embodiment is installed in the portable terminal 2 through an arbitrary recording medium or the network 2 to substantially form respective parts of the control part 26.

The control part 26 is, in terms of function concept, provided with a communication availability determining part 26a, an accuracy determining part 26b, and a route calculating part 26c. The communication availability determining part 26a is communication availability determining means for determining whether the communication between the communication part 25 of the portable terminal 2 and the communication part 35 of the in-vehicle navigation 3 is available. In addition, the accuracy determining part 26b is accuracy determining means for determining whether the accuracy of the vehicle position detected by the current position detecting part 34 of the in-vehicle navigation 3 that is described later satisfies standard accuracy. The route calculating part 26c is route calculating means for calculating a guidance route based on a destination in a case in which the portable terminal 2 accepts setting of the destination for route guidance from the user.

The "accuracy of the vehicle position" here refers to an accuracy regarding to what extent the position indicated as a detection result of the current position detecting part 34 of the in-vehicle navigation 3 is close to an actual position of the in-vehicle navigation 3. The obtaining method of the accuracy of the vehicle position is not limited to a specific method. However, in the present embodiment, the accuracy of the vehicle position is obtained based on a shortest distance from the position detected by the current position detecting part 34 of the in-vehicle navigation 3 to a road link that is closest to the position detected by the current position detecting part 34 of the in-vehicle navigation 3. Specifically, in a case in which the shortest distance from the detected position to the road link is smaller than a predetermined standard distance, the accuracy of the vehicle position is considered to be high. In a case in which the shortest distance from the detected position to the road link is almost the same as the predetermined standard distance, the accuracy of the vehicle position is middle. In a case in which the shortest distance from the detected position to the road link is greater than the predetermined standard distance, the accuracy of the vehicle position is considered to be low. The road link closest to the position can be determined by referring to the position detected by the current position detecting part 34 of the in-vehicle navigation 3 and map data stored in the map DB 27a that is described later. The predetermined standard distance may be previously set, for example, in the data recording part 27.

An expression method of the accuracy of the vehicle position is arbitrary. In the present embodiment, a "confidence degree" is utilized. The confidence degree is an index indicating a level of the accuracy of the vehicle position. Specifically, the confidence degree is expressed by three levels of "A," "B," and "C." The confidence degree "A" indicates that the accuracy of the vehicle position is high. The confidence degree "B" indicates that the accuracy of the vehicle position is middle. The confidence degree "C" indicates that the accuracy of the vehicle position is low. The confidence degree is stored in a data recording part 37 of the in-vehicle navigation 3 that is described later. Every time the vehicle position is detected by the current position detecting means of the in-vehicle navigation 3 that is described later, a new confidence degree is overwritten in the data recording part 37.

The "standard accuracy" is accuracy that is an index to determine whether the vehicle position is shared with other users or the terminal position is shared with other users, and previously recorded in the data recording part 37 of the in-vehicle navigation 3. The specific content of the standard accuracy is not limited. In the present embodiment, the confidence degree "B" is the standard accuracy. Specifically, in a case in which the accuracy of the vehicle position is the confidence degree "A" or "B," the accuracy of the vehicle position satisfies the standard accuracy. In a case in which the accuracy of the vehicle position is the confidence degree "C," the accuracy of the vehicle position does not satisfy the standard accuracy. The process to determine whether the accuracy of the vehicle position satisfies the standard accuracy is described later.

The processes executed by the respective parts of the control part 26 will be described in detail later.

### (Configuration - Portable terminal - Data recording part)

The data recording part 27 is recording means for recording programs necessary for the operation of the positional information sharing system and various kinds of data. For example, the data recording part 27 is configured using a hard disk (not shown) as an external storage device. However, in place of or in combination with the hard disk, other recording medium including a magnetic recording medium such as a magnetic disk or an optical recording medium such as a DVD and a Blu-ray disk may be utilized.

The data recording part 27 is provided with the map database (hereinafter, referred to as DB) 27a.

The map DB 27a is map information storing means for storing map information. The "map information" is configured to include, for example, road link data (road link numbers, connected node numbers, road coordinates, road types (including information to determine whether the road is a general road or highway), number of lanes, and travel restriction), node data (node numbers, coordinates), feature data (traffic lights, road signs, guard rails, buildings, etc.), target feature data (intersections, temporary stop lines, crossings, curves, ETC toll gates, highway exits, etc.), facility data (positions of facilities, types of facilities, etc.), geographic data, map display data to display a map on the display 23, etc.

### (Configuration - In-vehicle navigation)

Next, the configuration of the in-vehicle navigation 3 is explained. The in-vehicle navigation 3 is a known navigation device that is installed in a vehicle and outputs various kinds of guidance to a driver of the vehicle. For example, the in-vehicle navigation 3 is a device connected in a communicable manner by line using a CAN (controller area network), etc. with an ECU (engine control unit) of the vehicle. As shown in FIG. 1, the in-vehicle navigation 3 is provided with a speaker 31, a touch panel 32, a display 33, a current position detecting part 34, and a communication part 35, a control part 36, and the data recording part 37. The speaker 31, the touch panel 32, the display 33, and the data recording part 37 can be configured in the same manner as those of the portable terminal 2. Therefore, detailed explanation is not given. The data recording part 37a includes a map DB 37a in the same manner as the data recording part 27 of the portable terminal.

### (Configuration - In-vehicle navigation - Current position detecting part)

The current position detecting part 34 is vehicle position detecting means for detecting a current position (the aforementioned vehicle position) of the in-vehicle navigation 3. For example, the current position detecting part 34 is provided with at least one of a GPS, a geomagnetic sensor, a distance sensor, and a gyro sensor (none of which is shown), and detects a current position (coordinate) and orientation of the in-vehicle navigation 3 in a known method. The current position detecting part 34 detects a current position of the in-vehicle navigation 3 in a known matching method based on the current position (coordinate) and orientation of the in-vehicle navigation 3, etc. detected in such a manner. For example, the current position detecting part 34 determines a road with a position and an orientation that is closest to the detected current position (coordinate) and orientation of the in-vehicle navigation 3 from roads determined based on the map information stored in the map DB 27a, and detects, as the current position of the in-vehicle navigation 3, the position closest to the detected current position (coordinate) of the in-vehicle navigation 3 from positions on the determined road. The current position detecting part 34 of the in-vehicle navigation 3 is detecting means for detecting the current position based on various kinds of information directly obtained from the vehicle such as a distance sensor, a gyro sensor, etc. unlike the current position detecting part 24 of the portable terminal 2 which detects the current position using only a radio communication technology such as the GPS, etc. Therefore, the current position detecting part 34 is capable of performing detection of positional information with accuracy higher than the current position detecting part 24 of the portable terminal 2 in a normal position detection environment. Thus, it becomes possible to share a further accurate position of each user, for example, by obtaining the vehicle position detected by the current position detecting part 34 instead of the terminal position at Step B3 (SB3) of a first-person positional information obtaining process that is described later and utilizing the obtained vehicle position as a first-person position.

### (Configuration - In-vehicle navigation - Communication part)

The communication part 35 is vehicle-side communication means for performing communication with the portable terminal 2 through a network. The network is not limited to a specific type or configuration. However, in the present embodiment, the communication part 35 may be configured as radio communication means using known Bluetooth.

### (Configuration - In-vehicle navigation - Control part)

The control part 36 is control means for controlling the in-vehicle navigation 3, specifically a computer provided with a CPU, various kinds of programs recognized and executed on the CPU (including a basic control program such as an OS and an application program to be activated on the OS and realize specific functions), and an internal memory such as a RAM for storing the programs and various kinds of data. Particularly, a positional information sharing program according to the present embodiment is installed in the in-vehicle navigation 3 through an arbitrary recording medium or the network to substantially form respective parts of the control part 36.

### (Process)

Next, the processes executed by the positional information sharing system configured as above are explained. In the explanation for the following respective processes, the control part 26 of the portable terminal 2 or the control part 36 of the in-vehicle navigation 3 executes the processes if any controlling body is not specified. The source to obtain information or the obtaining route are previously stored in the data recording part 27 of the portable terminal 2 or the data recording part 37 of the in-vehicle navigation 3 in a known timing or a known method, or inputted by a user, etc., through the touch panel 22 of the portable terminal 2 or the touch panel 32 of the in-vehicle navigation 3 if not specified. In addition, step is referred to as "S."

### (Process -Authentication process)

Initially, an authentication process is explained. The authentication process is a process that is firstly executed by the portable terminals 2 of users that intend to share the positional information and to synchronize the portable terminals 2 so as to become communicable without a security authentication. Various known processes may be utilized as the authentication process. An example of the processes is explained below.

Initially, each user activates an application to share the positional information on the portable terminal 2, thereby a password input screen is displayed on the display 23 of the portable terminal 2. When the user inputs a predetermined password on the touch panel 22, the password and an authentication request signal including an identification ID to uniquely identify the portable terminal 2 are transmitted to the center device 1. As the predetermined password, the same password should be utilized for the users that intend to share the positional information. Therefore, for example, a password previously determined between the users is utilized.

The control part (not shown) of the center device 1 that has received the authentication request signal records the password and the identification ID included the authentication request signal in the data recording part (not shown) of the center device 1 in an associated manner. Subsequently, the control part of the center device 1 determines whether the same password as the received password is stored in the data recording part. In a case in which the same password is not recorded, the control part waits until the same password is recorded in the data recording part. In a case in which the same password is recorded in the data recording part, that is, in a case in which another user inputs the same password and the control part of the center device 1 receives an authentication request signal including the same password, the control part of the center device 1 records the password and the identification ID included the authentication request signal in the data recording part (not shown) of the center device 1 in an associated manner and records a plurality of identification IDs recorded in association with the same password as the identification IDs of the portable terminals 2 belonging to the same group. The control part of the center device 1 transmits, toward the portable terminals 2 belonging to the same group, an authentication completed signal indicating a completion of authentication with the identification IDs of the portable terminals 2. The respective portable terminals 2 determine that the authentication has completed when the portable terminals 2 receive the authentication completed signal including their own identification IDs. In a case in which the authentication has completed, the portable terminals 2 can share the positional information between each other through the center device 1 without executing the authentication process any more. Even in a case in which there are three or more portable terminals 2 that transmitted the authentication request signal including the same password, the authentication process can be executed in the same manner. Then, the authentication process terminates.

### (Process - Destination setting process)

Subsequently, a destination setting process is explained. The destination setting process is a process to set a common destination among the users. After the authentication process has terminated, the destination setting process is initiated by being activated by any one of the users in a predetermined method. Various known processes can be utilized as such a destination setting process. An example is explained below. In the destination setting process and a guidance process that is described later, the number of users is not limited to a specific number. The following explanation is given based on a case in which two users share the positional information between each other. In addition, the explanation for the respective processes is given focusing on one of the two users. The user of a portable terminal 2 is referred to as "first-person" and the user of another portable terminal 2 is referred to as "second-person" as necessary. In addition, the vehicle that the first-person rides is referred to as "first-vehicle" and the vehicle that the second-person rides is referred to as "second-vehicle." In a case in which they are not necessary to be identified between each other, they are merely referred to as the "vehicle."

When the destination setting process is activated, a destination input screen is displayed on the display 23 of the portable terminal 2 of the first-person. When the first-person inputs a destination on the touch panel 22, the route guidance part 26c calculates a guidance route from the current position of the portable terminal 2 of the first-person to the destination and displays the calculated guidance route on the display 23 of the portable terminal 2. Here, the current position to be utilized when the route guidance part 26c calculates a guidance route may be either the aforementioned vehicle position or the terminal position, which is described later. In addition, together with or instead of the guidance route, a required time from the current position of the portable terminal 2 of the first-person computed by the control part 26 of the portable terminal 2 may be computed in a known method and the computed required time may be displayed on the display 23 of the portable terminal 2 of the first-person. In addition, a destination setting signal including the destination inputted in such a manner is transmitted to the authenticated portable terminal 2 of the second-person in a known method. That is, the information to determine the destination inputted in such a manner (for example, coordinates of the destination) is transmitted to the center device 1 together with the identification ID of the portable terminal 2 of the first-person. The control part of the center device 1 determines the identification ID of the portable terminal 2 of the second-person belonging to the same group based on the transmitted identification ID, and transmits information to determine the received destination together with the determined identification ID of the portable terminal 2 of the second-person. In a case in which the portable terminal 2 of the second-person that has received the information confirms that the identification ID transmitted together with the information matches the identification ID of the portable terminal 2 of the second-person, the destination determined by the information is displayed on the display 23 as the common destination. On the display 23 of the portable terminal 2 of the second-person, the guidance route from the current position of the portable terminal 2 of the second-person to the destination is displayed. In such a manner, the portable terminals 2 belonging to the same group can share the common destination. Then, the destination setting process terminates. The method to transmit and receive the positional information through the center device 1 using the identification IDs in such a manner is also applied to the respective processes described later.

### (Process - Guidance process)

Next, the guidance process executed by the positional information sharing system as configured above is explained. The guidance process is roughly a process to share the positional information among the synchronized users by displaying the positional information of the users on the displays 23 of the respective portable terminals 2.

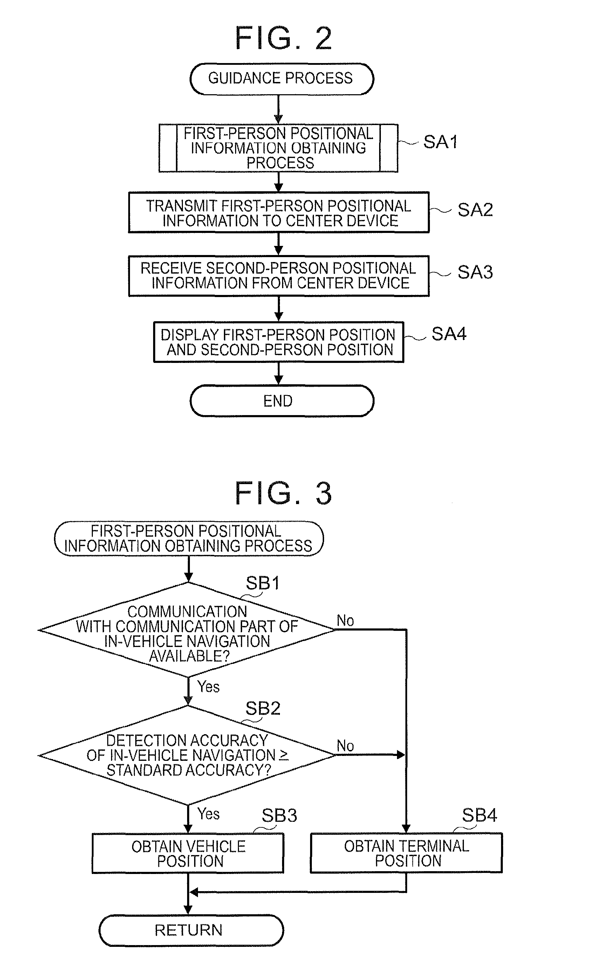

FIG. 2 is a flowchart of the guidance process. As shown in FIG. 2, the control part 26 of the portable terminal 2 of the first-person executes the first-person positional information obtaining process (SA1).

### (Process - Guidance process - First-person positional information obtaining process)

Here, FIG. 3 shows a flowchart of the first-person positional information obtaining process. The process is a process to obtain the position of the first-person (hereinafter, referred to as first-person position). As shown in FIG. 3, the communication availability determining part 26a of the portable terminal 2 of the first-person performs determination of whether the communication of the portable terminal 2 of the first-person with the in-vehicle navigation 3 is available (SB1). The determination of whether the communication is available is not limited to a specific method. For example, the determination may be performed based on whether Bluetooth connection is established between the communication part 25 of the portable terminal 2 of the first-person and the communication part 35 of the in-vehicle navigation 3.

Specifically, in a state in which the in-vehicle navigation 3 is activated, the in-vehicle navigation 3 is broadcasting calculation signals by Bluetooth. When the first-person rides the vehicle with the portable terminal 2 of the first-person, the portable terminal 2 of the first-person becomes within a near field radio communication range (normally, within 10m from the in-vehicle navigation 3) of the in-vehicle navigation 3. Therefore, the portable terminal 2 of the first-person receives the calculation signals from the in-vehicle navigation 3 and transmits a connection establishing signal to establish connection by near field radio communication with respect to the in-vehicle navigation 3.

The in-vehicle navigation 3 that has received the connection establishing signal transmits a PIN code request signal to the portable terminal 2 of the first-person, and the portable terminal 2 of the first-person that has received the PIN code request signal displays a PIN code input screen on the display 23 of the portable terminal 2 of the first-person to prompt an input of a PIN code. When the first-person inputs the PIN code, the portable terminal 2 of the first-person transmits a PIN code signal. When the in-vehicle navigation 3 receives the PIN code, the in-vehicle navigation 3 checks the received PIN code with a PIN code previously recorded in the in-vehicle navigation 3. When matched, the in-vehicle navigation 3 establishes the Bluetooth connection with the portable terminal 2 of the first-person. The communication availability determining part 26a determines whether the Bluetooth connection is established between the communication part 25 of the portable terminal 2 and the communication part 35 of the in-vehicle navigation 3.

In a case in which the communication with the communication part 35 of the in-vehicle navigation 3 is not available (SB1: No), the communication part 25 of the portable terminal 2 of the first-person cannot obtain the vehicle position by communication with the communication part 35 of the in-vehicle navigation 3. Therefore, the communication part 25 of the portable terminal 2 of the first-person abandons obtaining the vehicle position and obtains the terminal position detected by the current position detecting part 24 of the portable terminal 2 of the first-person (SB4).

On the other hand, in a case in which the communication with the communication part 35 of the in-vehicle navigation 3 is available (SB1: Yes), the accuracy determining part 26b performs determination of whether the accuracy of the vehicle position satisfies the standard accuracy (SB2). Specifically, the control part 36 of the in-vehicle navigation 3 transmits a signal including the accuracy of the vehicle position recorded in the data recording part 37 of the in-vehicle navigation 3 to the portable terminal 2. The accuracy determining part 26b of the portable terminal 2 compares the accuracy of the vehicle position included in the received signal with the standard accuracy recorded in the data recording part 27 of the portable terminal 2 and performs the determination of whether the accuracy of the vehicle position satisfies the standard accuracy.

In a case in which it is determined that detection accuracy of the in-vehicle navigation 3 does not satisfy the standard accuracy (SB2: NO), the vehicle position is determined to be likely to be largely different from the actual current position, the vehicle position is not obtained, and the terminal position detected by the current position detecting part 24 of the portable terminal 2 of the first-person is obtained (SB4).

On the other hand, in a case in which it is determined that the detection accuracy of the in-vehicle navigation 3 satisfies the standard accuracy (SB2: YES), the vehicle position is determined to be close to the actual current position of the first-person compared to the terminal position, and the vehicle position detected by the current position detecting part 34 of the vehicle is obtained through the communication part 25 (SB3). After the processes at SB3 or SB4, the control part 26 of the portable terminal 2 of the first-person terminates the first-person positional information obtaining process and the process returns to the guidance process in FIG.2 of a main routine.

Referring back to FIG. 2, the control part 26 of the portable terminal 2 of the first-person transmits first-person positional information to the center device 1 through the communication part 25 of the portable terminal 2 of the first-person (SA2). The "first-person positional information" here is information relating to a position of the first-person, and in the present embodiment, configured as the vehicle position obtained at SB3 or the terminal position obtained at SB4. The center device 1 that has received the first-person positional information transmits the first-person positional information to the portable terminal 2 of the second-person authenticated in the aforementioned authentication process. Here, the method to transmit the first-person positional information to the portable terminal 2 of the second person is not limited and a known method may be utilized. For example, the center device 1 transmits a signal which includes the first-person positional information with the identification ID of the portable terminal 2 of the second-person. The portable terminal 2 of the second-person that has received the signal compares the identification ID included in the signal with own identification ID, and in a case in which the identification IDs match, the first-person positional information included in the signal may be obtained.

Subsequently, the control part 26 of the portable terminal 2 of the first-person receives second-person positional information from the center device 1 (SA3). The "second-person positional information" is positional information relating to the position of the second-person, and in the present embodiment, configured as the vehicle position obtained by the current position obtaining part of the in-vehicle navigation 3 of the second-person or the terminal position obtained by the current position obtaining part of the portable terminal 2 of the second-person. The method in which the second-person obtains the vehicle position or the terminal position is not limited. In the present embodiment, the explanation is given based on a case in which the portable terminal 2 of the second-person obtains the vehicle position or the terminal position in the same process as the aforementioned first-person positional information obtaining process.

Here, the method in which the control part 26 of the portable terminal 2 of the first-person receives the second-person positional information from the center device 1 is not limited to a specific method. A known method can be utilized. For example, the center device 1 transmits a signal which includes the second-person positional information with the identification ID of the portable terminal 2 of the first-person. The portable terminal 2 of the first-person that has received the signal compares the identification ID included in the signal with own identification ID. In a case in which the identification IDs match, the first-person positional information included in the signal may be obtained.

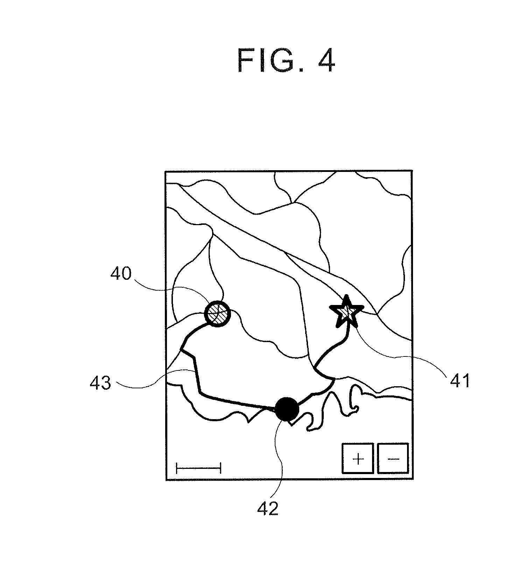

Based on the first-person positional information obtained at SA1 and the second-person positional information obtained at SA3 in such a manner, the control part 26 of the portable terminal 2 of the first-person displays the current position of the first-person and the current position of the second-person on the display 23 of the portable terminal 2 (SA4). The route calculating part 26c of the portable terminal 2 of the first-person calculates a guidance route from the current position of the first-person to the destination obtained in the destination setting process and a guidance route from the current position of the second-person to the destination obtained in the destination setting process respectively in a known route calculation method (for example, Dijkstra method). In the first-person positional information obtaining process shown in FIG. 2, in a case in which the vehicle position is obtained (SB3), the route calculating part 26c calculates a route from the obtained vehicle position to the destination. In a case in which the terminal position is obtained (SB4), the route calculating part 26c calculates a route from the obtained terminal position to the destination. In such a manner, in a case in which the vehicle position with higher accuracy than the terminal position is obtained, it is possible to calculate the guidance route based on a further accurate current position by calculating the guidance route from the vehicle position to the destination. Also for the guidance route from the current position of the second-person to the destination, in a case in which the current position of the second-person is the vehicle position, it is possible to calculate the guidance route based on a further accurate current position by calculating the guidance route from the vehicle position to the destination. The control part 26 of the portable terminal 2 of the first-person displays an icon 40 indicating the current position of the first-person, an icon 41 indicating the current position of the second-person, an icon 42 indicating the destination, and a guidance route 43, as shown in a display example of the display 23 of the portable terminal 2 in FIG. 4.

Here, as shown in FIG. 4, at the current position of the portable terminal 2 of the first-person or the second-person which has obtained the vehicle position at SB3 in the first-person positional information obtaining process shown in FIG. 3, the icon 40 indicating the current position of the first-person or the icon 41 indicating the current position of the second-person is displayed in a first mode. At the current position of the portable terminal 2 which has obtained the terminal position at SB4 of the first-person positional information obtaining process shown in FIG. 3, the icon 40 indicating the current position of the first-person or the icon 41 indicating the current position of the second-person is displayed in a second mode.

The "first mode" here is a mode indicating that the portable terminal 2 has obtained the vehicle position and not limited to a specific mode. In the present embodiment, a round icon is displayed as the icon 40 on a map of the display 23. However, a vehicle-shaped icon may be displayed. In addition, the "second mode" here is a mode indicating that the portable terminal 2 has obtained the terminal position and not limited to a specific mode as long as the second mode is different from the aforementioned first mode. In the present embodiment, a star-shaped icon is displayed as the icon 41 on the map of the display 23. However, a human-shaped icon may be displayed.

In such a manner, because a display manner of the icon is changed depending on whether the portable terminal 2 has obtained the vehicle position or the terminal position, when the first-person views the display, the first-person is capable of recognizing by the senses that the current position of the second-person has high accuracy based on a detection of the current position detecting means of the in-vehicle navigation 3 or poor accuracy, compared to the in-vehicle navigation 3, based on the detection of the current position detection means of the portable terminal 2. In addition, for example, in a case in which the first-person gets off the vehicle with the portable terminal 2 of the first-person and moves to a position where a Bluetooth connection between the portable terminal 2 of the first-person and the in-vehicle navigation 3 is not available, the portable terminal 2 of the first-person cannot obtain the vehicle position (SB1: No in FIG. 3). Therefore, the terminal position is obtained (SB4 in FIG. 3). Then, the current position of the first-person is displayed in the second mode on the display 23. Thus, the second-person that has viewed the display of the display 23 is capable of recognizing that the first-person is likely to be away from the vehicle. Then, the control part 26 of the portable terminal 2 of the first-person terminates the guidance process.

### (Effect)

According to the present embodiment as mentioned above, in a case in which the mutual communication between the communication part 35 of the in-vehicle navigation 3 and the communication part 25 of the portable terminal 2 is available, the vehicle position detected by the current position detecting part 34 of the in-vehicle navigation 3 is shared with a different portable terminal 2. Therefore, the detection result of the current position detecting part 34 with detection accuracy higher than the current position detecting part 24 of the portable terminal 2 can be used to share the position. Thereby, the respective users can share further accurate positions between each other.

In addition, in a case in which the accuracy of the vehicle position detected by the current position detecting part 34 of the in-vehicle navigation 3 does not satisfy the standard accuracy, the terminal position is shared even when the mutual communication between the communication part 35 of the in-vehicle navigation 3 and the communication part 25 of the portable terminal 2 is available. Therefore, in a case in which the detection accuracy by the current position detecting part 34 of the in-vehicle navigation 3 is low due to some reasons, it is possible share the terminal position detected by the current position detecting part 24 of the portable terminal 2 instead of sharing the vehicle position detected by the current position detecting part 34 of the in-vehicle navigation 3. Therefore, it is possible to prevent the position accuracy from being lowered as a result of the use of the detection result by the current position detecting part 34 of the in-vehicle navigation 3 to share the position.

In addition, an output mode is different between a case in which the vehicle position is shared and a case in which the terminal position is shared. Therefore, based on the output mode, it becomes possible for the user to easily recognize whether each portable terminal 2 shares the vehicle position or the terminal position. Thereby, in a case in which the users of the connected portable terminals 2 are in the vehicle, the users can recognize such a situation. Also, it becomes possible for each user to easily recognize whether the positional information of the other user is a detected position with high accuracy that was detected by the vehicle position detecting means.

In addition, in a case in which the mutual communication between the communication part 35 of the in-vehicle navigation 3 and the communication part 25 of the portable terminal 2 is available, the route calculating part 26c calculates a guidance route from the vehicle position detected by the current position detecting part 34 of the in-vehicle navigation 3 to a destination. Therefore, the route guidance can be performed using the detection result by the current position detecting part 34 of the in-vehicle navigation 3 with detection accuracy higher than the current position detecting part 24 of the portable terminal 2. Thereby, it becomes possible to calculate the guidance route based on a further accurate current position.

### [III] (Modification example of embodiment)

While various configuration and means have been described in conjunction with the embodiment according to the present invention, various modifications and/or improvements may be made within the broad spirit and scope of the underlying principles described in claims. The examples of these alternatives are described below.

### (Problems to be solved by the invention and its effects)

Problems to be solved by the invention and effects of the invention are not limited to the contents described above, and may vary depending on the environment where the invention is executed and/or details of the configuration. Therefore, only a part of the problems described above may be solved, or only a part of the effects described above may be accomplished. For example, even in a case in which the users cannot share further accurate positions between each other, when the positions with accuracy slightly higher than conventional devices can be shared, or when the positions with accuracy approximately equal to conventional devices can be shared using a technology different from conventional devices, the object of the present invention is solved.

### (Division and Integration)

The electronic constituent elements described above are merely functional concepts, and need not be physically configured as illustrated in the drawings. That is, the specific form of division/integration of each portion is not limited to that shown in the drawings. The constituent elements, as a whole or in part, can be divided and/or integrated in any manner either functionally or physically based on various types of loads or use conditions. For example, the respective constituent elements of the positional information sharing system may be separately allocated and connected with each other through network. In addition, the explanation is given for the positional information sharing system that is provided with the center device 1, the portable terminal 2, and the in-vehicle navigation 3. However, the portable terminal 2 and the in-vehicle navigation 3 may not be limited to a single unit, but may be multiple units.

### (Route calculating part)

In the present embodiment, the explanation is given according a case in which the route calculating part 26c provided in the portable terminal 2 calculates a guidance route from the current position of the first-person or the current position of the second-person to a destination. The configuration is not limited thereto. The route calculating part 26c may be provided in the center device 1. Specifically, the portable terminal 2 transmits the positional coordinates of the current position of the first-person and the destination to the center device 1. A route calculating part in the center device that has received the positional coordinates may calculate the guidance route from the current position to the destination and transmit information relating to the guidance route calculated in such a manner to the portable terminal 2 in a known method.

### (First mode and second mode)

In the present embodiment, the display mode of the current position is different between a case in which the vehicle position is obtained and a case in which the terminal position is obtained. However, the display mode may be the same. In addition, an audio mode may be differentiated between the first mode and the second mode. For example, an electric audio voice indicating which one of the vehicle position and the terminal position is obtained may be outputted.

### (Standard accuracy)

In the present embodiment, the explanation is given for the standard accuracy whose confidence level is B in any situation. However, the standard accuracy may be a value variable depending on the environment. For example, the accuracy of the terminal position detected by the current position detecting part 24 of the portable terminal 2 may be the standard accuracy. Specifically, every time the current position detecting part 24 of the portable terminal 2 obtains the terminal position, the control part 26 of the portable terminal 2 obtains the accuracy of the terminal position using the same method as the aforementioned method to obtain the accuracy of the vehicle position and records it in the data recording part 27 of the portable terminal 2. The accuracy determining part 26b may determine whether the vehicle position satisfies the standard accuracy by comparing the accuracy of the terminal position recorded in the data recording part 27 with the accuracy of the vehicle position obtained from the in-vehicle navigation 3. According to such a method, the positional information may be shared using the vehicle position or the terminal position whichever has higher accuracy. Therefore, the respective users are capable of sharing further accurate positions between each other. Alternatively, for example, in a case in which it is known that the accuracy of the vehicle position is always higher than the accuracy of the terminal position, the comparison with the standard accuracy may be omitted. In a case in which the vehicle position can be obtained, the vehicle position may be always used as the position of the first-person or the position of the second-person.

### (Part of characters and effects of embodiment)

Finally, a part of characters and effects of embodiment explained above is exemplified below. However, the characters and effects are not limited to the following contents. Only a part of the following effects may be accomplished by including only a part of the following characters. Effects other than the following effects may be accomplished by including characters other than the following characters.

The positional information sharing system according to an aspect 1 of the embodiment includes: vehicle position detecting means installed in a vehicle for detecting a vehicle position on a basis of information directly obtained from the vehicle, the vehicle position being a current position of the vehicle; vehicle-side communication means installed in the vehicle for performing communication; terminal position detecting means installed in a portable terminal for detecting a terminal position using a GPS, the terminal position being a current position of the portable terminal; terminal-side communication means installed in the portable terminal for performing communication with the vehicle-side communication means; and communication availability determining means for determining whether mutual communication between the vehicle-side communication means and the terminal-side communication means is available, wherein, in a case in which it is determined by the communication availability determining means that the mutual communication between the vehicle-side communication means and the terminal-side communication means is available, the terminal-side communication means obtains the vehicle position of the vehicle, in which the vehicle-side communication means is installed, from the vehicle position detecting means through the vehicle-side communication means and transmits the obtained vehicle position to a different portable terminal as a user position of the portable terminal, and in a case in which it is determined by the communication availability determining means that the mutual communication between the vehicle-side communication means and the terminal-side communication means is not available, the terminal-side communication means obtains the terminal position of the portable terminal, in which the terminal-side communication means is installed, from the terminal position detecting means and transmits the obtained terminal position to a different portable terminal as the user position of the portable terminal.

According to the positional information sharing system according to the aforementioned aspect 1, in a case in which the mutual communication between the vehicle-side communication means and the terminal-side communication means is available, the vehicle position detected by the vehicle position detecting means installed in the vehicle is shared with a different portable terminal. Therefore, the detection result by the vehicle position detecting means with detection accuracy higher than the terminal position detecting means can be used to share the position. Thereby, the respective users can share further accurate positions between each other.

The positional information sharing system according to another aspect 2 of the embodiment, in the positional information sharing system according to the aforementioned aspect 1, includes: accuracy determining means for determining whether accuracy of the vehicle position detected by the vehicle position detecting means satisfies standard accuracy, wherein, in a case in which it is determined by the accuracy determining means that the accuracy of the vehicle position does not satisfy the standard accuracy, even in a case in which it is determined by the communication availability determining means that the mutual communication between the vehicle-side communication means and the terminal-side communication means is available, the terminal-side communication means, for which it is determined that the mutual communication with the vehicle-side communication means is available, obtains the terminal position of the portable terminal, in which the terminal-side communication means is installed, from the terminal position detecting means and transmits the obtained terminal position to a different portable terminal as the user position of the portable terminal.

According to the positional information sharing system according to the aforementioned aspect 2, in a case in which the accuracy of the vehicle position detected by the vehicle position detecting means does not satisfy the standard accuracy, the terminal position is shared even when the mutual communication between the vehicle-side communication means and the terminal-side communication means is available. Therefore, in a case in which the detection accuracy by the vehicle position detecting means is low due to some reasons, it is possible to share the terminal position detected by the terminal position detecting means instead of sharing the vehicle position detected by the vehicle position detecting means. Therefore, it is possible to prevent the position accuracy from being lowered as a result of the use of the detection result by the vehicle position detecting means to share the position.

In the positional information sharing system according to another aspect 3 of the embodiment, in the positional information sharing system according to the aforementioned aspect 1 or 2, in a case in which the vehicle position is transmitted to the different portable terminal as the user position of the portable terminal, the portable terminal or the different portable terminal outputs the vehicle position in a first mode, and in a case in which the terminal position is transmitted to the different portable terminal as the user position of the portable terminal, the portable terminal or the different portable terminal outputs the terminal position in a second mode that is different from the first mode.

According to the positional information sharing system according to the aforementioned aspect 3, an output mode is different between a case in which the vehicle position is shared and a case in which the terminal position is shared. Therefore, based on the output mode, it becomes possible for the user to easily recognize whether the respective portable terminals share the vehicle position or the terminal position. Thereby, in a case in which the users of the connected portable terminals are in the vehicle, the users can recognize such a situation. Also, it becomes possible for each user to easily recognize whether the positional information of the other user is a detected position with high accuracy that was detected by the vehicle position detecting means.

The positional information sharing system according to another aspect 4 of the embodiment, in the positional information sharing system according to any one of the aforementioned aspects 1 to 3, includes route calculating means for calculating a guidance route on a basis of a destination in a case in which the portable terminal accepts setting of the destination for route guidance from a user, wherein, in a case in which it is determined by the communication availability determining means that the mutual communication between the vehicle-side communication means and the terminal-side communication means is available, the route calculating means calculates a guidance route from the vehicle position detected by the vehicle position detecting means of the vehicle, in which the vehicle-side communication means is installed, to the destination accepted from the user, and in a case in which it is determined by the communication availability determining means that the mutual communication between the vehicle-side communication means and the terminal-side communication means is not available, the route calculating means calculates a guidance route from the terminal position detected by the terminal position detecting means of the portable terminal, in which the terminal-side communication means is installed, to the destination accepted from the user.

According to the positional information sharing system according to the aforementioned aspect 4, in a case in which the mutual communication between the vehicle-side communication means and the terminal-side communication means is available, the route calculating means calculates a guidance route from the vehicle position detected by the vehicle position detecting means installed in the vehicle to a destination. Therefore, the route guidance can be performed using the detection result by the vehicle position detecting means with detection accuracy higher than the terminal position detecting means. Thereby, it becomes possible to calculate the guidance route based on a further accurate current position.

### Description of the Reference Numerals

1/ CENTER DEVICE
2/ PORTABLE TERMINAL
3/ IN-VEHICLE NAVIGATION
4/ ECU
21, 31/ SPEAKER
22, 32/ TOUCH PANEL
23, 33/ DISPLAY
24, 34/ CURRENT POSITION DETECTING PART
25, 35/ COMMUNICATION PART
26, 36/ CONTROL PART
26a/ COMMUNICATION AVAILABILITY DETERMINING PART
26b/ ACCURACY DETERMINING PART
26c/ ROUTE CALCULATING PART
27, 37/ DATA RECORDING PART
27a, 37a/ MAP DB
40/ ICON INDICATING CURRENT POSITION OF FIRST-PERSON
41/ ICON INDICATING CURRENT POSITION OF SECOND-PERSON
42/ ICON INDICATING DESTINATION
43/ GUIDANCE ROUTE

## Claims

1. A positional information sharing system comprising:
vehicle position detecting means installed in a vehicle for detecting a vehicle position on a basis of information directly obtained from the vehicle, the vehicle position being a current position of the vehicle;
vehicle-side communication means installed in the vehicle for performing communication;
terminal position detecting means installed in a portable terminal for detecting a terminal position using a GPS, the terminal position being a current position of the portable terminal;
terminal-side communication means installed in the portable terminal for performing communication with the vehicle-side communication means; and
communication availability determining means for determining whether mutual communication between the vehicle-side communication means and the terminal-side communication means is available, wherein,
in a case in which it is determined by the communication availability determining means that the mutual communication between the vehicle-side communication means and the terminal-side communication means is available, the terminal-side communication means obtains the vehicle position of the vehicle, in which the vehicle-side communication means is installed, from the vehicle position detecting means through the vehicle-side communication means and transmits the obtained vehicle position to a different portable terminal as a user position of the portable terminal, and
in a case in which it is determined by the communication availability determining means that the mutual communication between the vehicle-side communication means and the terminal-side communication means is not available, the terminal-side communication means obtains the terminal position of the portable terminal, in which the terminal-side communication means is installed, from the terminal position detecting means and transmits the obtained terminal position to a different portable terminal as the user position of the portable terminal.

2. The positional information sharing system according to claim 1, comprising accuracy determining means for determining whether accuracy of the vehicle position detected by the vehicle position detecting means satisfies standard accuracy, wherein,
in a case in which it is determined by the accuracy determining means that the accuracy of the vehicle position does not satisfy the standard accuracy, even in a case in which it is determined by the communication availability determining means that the mutual communication between the vehicle-side communication means and the terminal-side communication means is available, the terminal-side communication means, for which it is determined that the mutual communication with the vehicle-side communication means is available, obtains the terminal position of the portable terminal, in which the terminal-side communication means is installed, from the terminal position detecting means and transmits the obtained terminal position to a different portable terminal as the user position of the portable terminal.

3. The positional information sharing system according to claim 1 or 2, wherein,
in a case in which the vehicle position is transmitted to the different portable terminal as the user position of the portable terminal, the portable terminal or the different portable terminal outputs the vehicle position in a first mode, and
in a case in which the terminal position is transmitted to the different portable terminal as the user position of the portable terminal, the portable terminal or the different portable terminal outputs the terminal position in a second mode that is different from the first mode.

4. The positional information sharing system according to any one of claims 1 to 3, comprising route calculating means for calculating a guidance route on a basis of a destination in a case in which the portable terminal accepts setting of the destination for route guidance from a user, wherein,
in a case in which it is determined by the communication availability determining means that the mutual communication between the vehicle-side communication means and the terminal-side communication means is available, the route calculating means calculates a guidance route from the vehicle position detected by the vehicle position detecting means of the vehicle, in which the vehicle-side communication means is installed, to the destination accepted from the user, and
in a case in which it is determined by the communication availability determining means that the mutual communication between the vehicle-side communication means and the terminal-side communication means is not available, the route calculating means calculates a guidance route from the terminal position detected by the terminal position detecting means of the portable terminal, in which the terminal-side communication means is installed, to the destination accepted from the user.

5. A positional information sharing method, comprising:
communication availability determining step of determining whether mutual communication between vehicle-side communication means installed in a vehicle for performing communication and terminal-side communication means installed in a portable terminal for performing communication is available;
step in which, in a case in which it is determined at the communication availability determining step that the mutual communication between the vehicle-side communication means and the terminal-side communication means is available, the terminal-side communication means obtains the vehicle position detected on a basis of information directly obtained from the vehicle by vehicle position detecting means installed in the vehicle, in which the vehicle-side communication means is installed, from the vehicle position detecting means through the vehicle-side communication means and transmits the obtained vehicle position to a different portable terminal as a user position of the portable terminal, the vehicle position being a current position of the vehicle; and
step in which, in a case in which it is determined at the communication availability determining step that the mutual communication between the vehicle-side communication means and the terminal-side communication means is not available, the terminal-side communication means obtains the terminal position detected using a GPS by terminal position detecting means installed in the portable terminal, in which the terminal-side communication means is installed, from the terminal position detecting means and transmits the obtained terminal position to a different portable terminal as the user position of the portable terminal, the terminal position being a current position of the portable terminal.

6. A positional information sharing program causing a computer to execute the method according to claim 5.
